# EUROPÄISCHE PATENTSCHRIFT

(11) **EP 2 338 679 B1**
(45) Veröffentlichungstag und Bekanntmachung des Hinweises auf die Patenterteilung: **23.01.2013**
(21) Anmeldenummer: 10003964.3
(22) Anmeldetag: 15.04.2010
(51) Int. Cl.: A47G 27/02, C09J 7/02, B32B 7/12, B32B 27/12

(54) **Schutzabdeckung**
Protective covering
Revêtement de protection

(30) Priorität: 19.12.2009 DE 202009017084 U
(43) Veröffentlichungstag der Anmeldung: 29.06.2011
(73) Patentinhaber: Kirchner GmbH, 70329 Stuttgart (DE)
(72) Erfinder: Kirchner, Joachim, 70329 Stuttgart (DE); Kirchner, Oliver, 73733 Esslingen (DE)
(74) Vertreter: Kocher, Mark Werner

(56) Entgegenhaltungen:
- EP-A2- 0 959 119
- WO-A2-2009/078787
- DE-U1- 29 806 536
- US-A1- 2003 073 369
- US-A1- 2009 173 425

## Beschreibung

Die Erfindung betrifft eine Schutzabdeckung, insbesondere ein Vlies, mit einer flüssigkeitsundurchlässigen Folie aus Kunststoff, der im Oberbegriff des Anspruchs 1 angegebenen Gattung.

Bei verschiedenen Anlässen ist es erforderlich, begehbare Flächen abzudecken, um diese vor herabfallenden Arbeitsmaterialien flüssiger, pulverförmiger oder pastöser Art zu schützen. Diesbezüglich sei insbesondere auf Malerarbeiten oder Reparaturarbeiten in Räumen hingewiesen, bei denen Farben, Lacke, Verdünnungen, Öl, Wasser, Kleister, Gips, Zement und dgl. zum Einsatz kommen, die ohne Schutzmaßnahmen die Oberfläche des Fußbodens verunreinigen oder gar zerstören. Insbesondere bei hochwertigen Bodenbelägen wie Teppichböden oder Parkett sind erhebliche Schäden die Folge unzureichender Schutzmaßnahmen.

Um Verschmutzungen dieser Art zu begegnen, wurde in der DE 94 13 289 U1 bereits vorgeschlagen, eine Vlieslage mit einer Folienlage aus einem Kunststoffmaterial zu kombinieren, wobei die Vlieslage aus saugfähigen Naturfasern besteht und auf einer Seite der Vlieslage eine flüssigkeitsundurchlässige Folienlage angebracht ist, wobei die Folienlage auf der der Vlieslage abgewandten Seite eine rutschhemmende Oberfläche aufweist. Dieses Material hat sich bei ebenen Bodenflächen sehr gut bewährt.

Aus der WO 2009/078787 A2 ist chirurgisches Klebeband bekannt, das ein Trägermaterial umfasst, das einseitig mit einer Klebeschicht versehen ist und das eine Schicht aus Fasermaterial umfasst. Auf diese Schicht aus Fasermaterial ist ein Kunststofffilm aufgebracht. Das Klebeband soll in vorteilhafter Weise zereissbar sein, um eine einfache Anpassung an unterschiedliche Oberflächen zu ermöglichen und ferner eine hohe Dehnbarkeit aufweisen sowie wasserundurchlässig sein.

Die US 2009/0173425 A1 offenbart einen mehrlagig ausgebildeten, flexiblen Klebestreifen zur Abgabe von Duftstoffen, der eine Gewebelage und eine Klebelage umfasst, die jeweils flächig ausgebildet sind. Dieser Klebestreifen ist insbesondere zur Verwendung auf Bettwäsche und Kleidungsstücken vorgesehen.

Die US 2003/0073369 A1 offenbart eine Schutzstruktur für ein CD-Laufwerk, wobei die Schutzstruktur eine Faserschicht, einen Schutzfilm sowie eine Klebeschicht umfasst, die jeweils vollflächig miteinander verbunden sind.

Bei Treppen besteht allerdings das Problem, dass viele Trittflächen in aufeinanderfolgenden unterschiedlichen Ebenen gebildet werden, auf denen die bekannten Abdeckprodukte nicht sicher liegen bleiben und für Personen, die die Treppe begehen müssen, nicht eindeutig erkennbar ist, wo sich die Trittflächen der Stufen befinden. Durch diese Unzulänglichkeiten stellt die Verwendung der bisher bekannten Produkte auf Treppen eine erhebliche Gefährdung für die Personen, die die Treppe begehen müssen, dar.

Der vorliegenden Erfindung liegt daher die Aufgabe zugrunde, eine Schutzabdeckung der gattungsgemäßen Art vorzuschlagen, die einen sicheren Halt auf der Stufe und damit eine gefahrlose Begehbarkeit der Treppe bietet.

Diese Aufgabe wird durch eine Schutzabdeckung mit den Merkmalen des Anspruchs 1 gelöst.

Die Erfindung bietet die Möglichkeit, das die Schutzabdeckung unter Berücksichtigung der Treppenbreite zu bemessen und dieses derart an der jeweiligen Treppenstufe zu fixieren, dass eine sichere Lage gewährleistet ist.

Gemäß einer zweckmäßigen Ausgestaltung sind die Streifen über die gesamte Länge durchgehend ausgeführt. Die Streifen können sehr nahe neben den seitlichen Rändern der Schutzabdeckung bzw. der entsprechenden Warenbahn angeordnet sein. Es ist jedoch auch möglich, dass die Streifen zu den seitlichen Rändern einen Abstand aufweisen, der maximal 50 mm beträgt, vorzugsweise jedoch zwischen 10 mm und 25 mm liegt. Auch für die Gestaltung der Breite der Streifen bestehen unterschiedliche Möglichkeiten, wobei diese Breite zwischen 10 mm und 30 mm liegen sollte, als besonders bevorzugt wird jedoch eine Breite von 20 mm angesehen.

Um den in der Praxis üblicherweise vorkommenden Formen und Größen in Aufstiegsrichtung der Treppe Rechnung zu tragen, wird es als vorteilhaft angesehen, dass die Schutzabdeckung eine Breite von 20 cm bis 50 cm vorzugsweise etwa 30 cm bis 33 cm besitzt. Die Schutzabdeckung wird vorzugsweise als Meterware hergestellt und diese Warenbahn zur Lagerung und zum Transport zu einer Rolle aufgewickelt. Damit beim Aufrollen keine Probleme auftreten, sollte die Warenbahn über ihre gesamte Breite eine möglichst einheitliche Dicke aufweisen. Es wird daher als besonders vorteilhaft angesehen, dass die Streifen eine maximale Dicke von ≤ 0,2 mm vorzugsweise 0,15 mm aufweisen. Dabei kann die Dicke des Klebebandes etwa 0,09 mm und die Dicke der Schutzfolie etwa 0,06 mm betragen.

Zweckmäßig ist es, wenn die Vlieslage zumindest im Wesentlichen, vorzugsweise ausschließlich, aus saugfähigen Fasern hergestellt ist. Da die Vlieslage bei Verwendung der Schutzabdeckung die nach außen gewandte Oberfläche der Schutzabdeckung bildet, ist es vorteilhaft, wenn die Fasern der Vlieslage beispielsweise Farbspritzer von flüssiger oder pastöser Farbe oder andere im Baubereich verwendete Flüssigkeiten zumindest teilweise aufnehmen und, insbesondere durch Absorption, binden kann.

Alternativ können die Fasern der Vlieslage aus einem nicht saugfähigen Material hergestellt sein, beispielsweise aus Kunststoff.

Bei einer alternativen Ausführungsform einer Schutzabdeckung ist anstelle einer Kombination von Vlieslage und Folienlage wenigstens eine Lage eines flächigen, flexiblen Abdeckmaterials, beispielsweise eine Papierbahn aus glattem Papier oder Krepppapier; eine Verbundmaterialbahn aus laminiertem Papier und Kunststoff oder eine andere Materialkombination mit den Streifen zur lösbaren Festlegung der Schutzabdeckung an einem Untergrund, insbesondere einer Treppenoberfläche, versehen.

Bei einer weiteren Ausführungsform sind die Streifen zur Festlegung der Schutzabdeckung in Längserstreckung der Schutzabdeckung mit unterschiedlichem Abstand zum Rand der Schutzabdeckung angeordnet. Dies kann beispielsweise durch schräge Anbringung gegenüber dem Rand, durch wellenlinienförmige Anordnung oder durch abschnittsweise versetzte Anordnung der Streifen erreicht werden. Ziel der Anordnung der Streifen mit unterschiedlichem Abstand vom Rand ist es, wie auch bei der Auswahl eines möglichst dünnen Materials für die Streifen, beim Aufwickeln der Schutzabdeckung einen durch die Streifen bedingten lokalen Durchmesserzuwachs im Randbereich der Schutzabdeckung möglichst gering zu halten.

Die Erfindung ist nachstehend anhand eines in der Zeichnung dargestellten Ausführungsbeispiels näher erläutert. In der Zeichnung zeigt:
- Fig. 1: einen Ausschnitt einer Warenbahn eines länglichen Abdeckvlieses,
- Fig. 2: einen Längsschnitt durch das Abdeckvlies im Bereich eines Klebebandes mit Schutzfolie,
- Fig. 3: einen Ausschnitt einer Treppe mit vom Abdeckvlies geschützten Treppenstufen,
- Fig. 4: eine Ausführungsvariante zu Fig. 3,
- Fig. 5: einen Ausschnitt einer breiten Warenbahn des Vlieses mit mehreren Klebebändern.

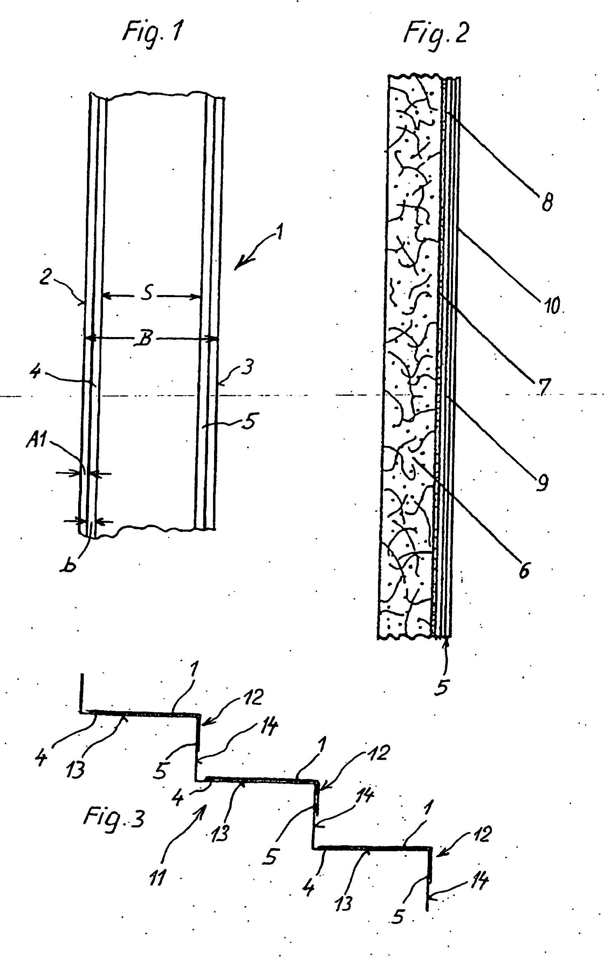

Die Fig. 1 zeigt einen Ausschnitt einer länglichen, verallgemeinernd auch als Vlies 1 bezeichneten Schutzabdeckung. Das Vlies wird beispielsweise als Meterware zu einer Rolle gewickelt zur Verfügung gestellt wird, eine Bereitstellung in vorkonfektionierten Größen ist ebenfalls möglich. Die Warenbahn des Vlieses 1 ist entlang seitlicher Ränder 2, 3 jeweils mit in Längsrichtung verlaufenden Streifen 4, 5 versehen, die, wie später zu Fig. 2 erläutert, eine Klebstoffschicht 9 und eine Schutzfolie 10 umfassen. Die Warenbahn des Vlieses 1 hat beispielsweise eine Breite B von 20 cm bis 50 cm, vorzugsweise etwa 30 cm bis 33 cm. Die Streifen 4, 5 können nahe der Ränder 2, 3 angeordnet sein oder auch einen Abstand A1 zu den Rändern von , insbesondere maximal 50 mm, aufweisen. Bevorzugt wird ein Abstand von 10 mm bis 25 mm angesehen. Die Streifen 4, 5 besitzen beispielsweise eine Breite b von 10 mm bis 30 mm, vorzugsweise etwa 20 mm. Zwischen den Streifen 4, 5 ist ein Abstand S gegeben, beispielsweise von ca. 27 cm. Alternativ zu der dargestellten Ausführung ist es auch möglich, die Streifen 4, 5 in ihrer Länge zu begrenzen und eine Folge von kurzen Streifen vorzusehen. Die dargestellten durchgehenden Streifen 4, 5 werden aber als besonders vorteilhaft angesehen.

Die Fig. 2 zeigt einen Längsschnitt durch das Vlies 1 im Bereich des Streifens 5. Das Vlies 1 umfasst exemplarisch ein Nadelvlies 6, wobei die Fasern des Vlieses beispielsweise durch Nadelvliestechnik verbunden sind. Durch diese Herstellungsart sind außer den Fasern keine weiteren Stoffe zum Zusammenhalt der Fasern erforderlich. Für die vorgesehene Benutzung als Abdeckvlies können die Fasern sogar zu 100 % aus Regeneratfasern bestehen, d. h. es sind keine neuen Rohstoffe erforderlich, sondern es wird in vollem Umfang recyceltes Material eingesetzt. Als Material für den Naturfaseranteil des Nadelvlieses kommen insbesondere Baumwoll- und Viskosefasern in Betracht.

An dem Nadelvlies 6 ist mittels eines Klebers 7 aus einem thermoplastischen Material eine auch als Folienlage bezeichnete Kunststofffolie 8 befestigt. Die Kunststofffolie 8 besteht beispielsweise aus Polyurethan, Ethylenvinylacetat oder Polyethylen. An der dem Nadelvlies 6 abgewandten Seite ist die Oberfläche der Kunststofffolie 8 rutschhemmend beschichtet, wobei diese Beschichtung vorzugsweise aus Ethylenvinylacetat besteht. Der Kleber 7 zur Festlegung des Nadelvlieses 6 kann beispielsweise als Polyethylen in Pulverform aufgetragen sein.

Der Streifen 5 besteht aus einer Klebstoffschicht 9, vorzugsweise einem doppelseitigem Klebeband und einer Schutzfolie 10. Die Klebstoffschicht 9 weist einen Klebstoff auf, insbesondere ein Synthese-Kautschukmaterial, der möglichst rückstandsfrei von einer Fläche, auf die das Vlies 1 aufgeklebt wird, ablösbar ist. Die Schutzfolie 10 ist beispielsweise ein Silikonpapier. Damit ein gleichmäßiges Aufwickeln der Warenbahn des Vlieses 1 zu einer Rolle möglich ist, sollte die Dicke des Vlieses im Bereich der Streifen 4, 5 nur unwesentlich größer sein als zwischen den Streifen 4, 5. Es wird daher als vorteilhaft angesehen, wenn die Dicke der Streifen 4, 5 nicht größer als 0,2 mm gewählt ist, insbesondere nicht größer als 0,15 mm. Exemplarisch kann das Klebeband 9 beispielsweise eine Dicke von 0,09 mm und die Schutzfolie 10 eine Dicke von 0,06 mm aufweisen.

Das Vlies 1 eignet sich insbesondere zum Abdecken von Treppenstufen beispielsweise während durchzuführender Baumaßnahmen oder Renovierungsarbeiten, um die Treppenstufen vor Schmutz und eventueller Beschädigung zu schützen. Hierzu wird von der Warenbahn des Vlieses 1 ein Stück von einer solchen Länge abgeschnitten, die der Breite der Treppe bzw. der Treppenstufen entspricht. In Fig. 3 ist ein Ausschnitt einer Treppe 11 dargestellt mit Treppenstufen 12, die eine Auftrittsfläche 13 und eine Vorderseite 14 aufweisen. Von dem auf die Länge geschnittenen Vlies 1 werden die auf dem Klebeband 9 (vgl. Fig. 2) befindlichen Schutzfolien 10 abgezogen und das Vlies 1 mittels der sich entlang der Ränder 2, 3 (vgl. Fig. 1) erstreckenden Klebebänder 9 der Streifen 4, 5 auf die Auftrittsfläche 13 und an die Vorderseite 14 geklebt.

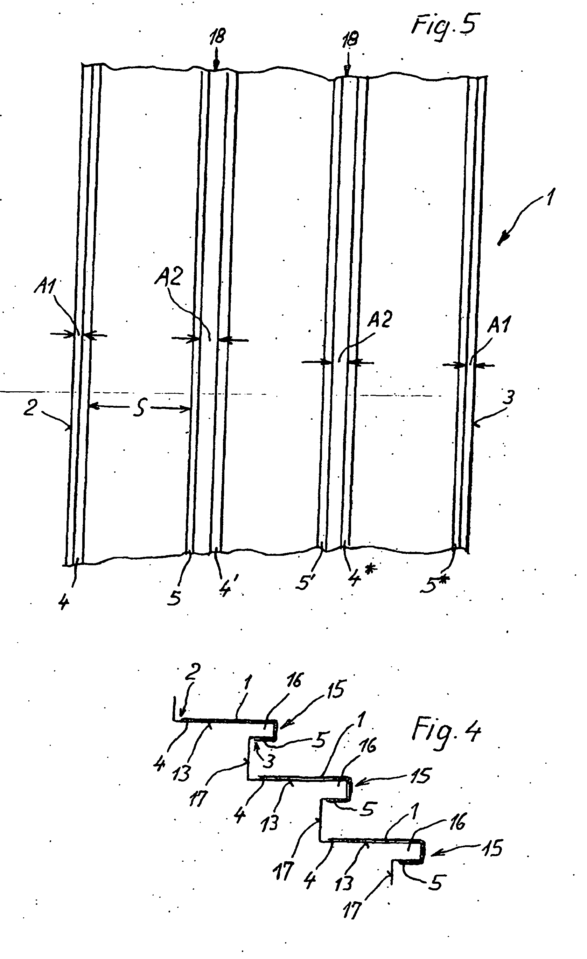

Die Fig. 4 zeigt eine Ausführungsvariante zur Fig. 3, wobei in Fig. 4 Treppenstufen 15 einen Überstand 16 bezogen auf eine Vorderseite 17 aufweisen. Zum Abdecken der Treppenstufen 15 wird das Vlies 1 auf Länge geschnitten und die Schutzfolie von den Streifen 4, 5 abgezogen. Dann wird das Vlies 1 mit dem seitlichen Rand auf die Auftrittsfläche 13 gelegt und mittels des Klebebands vom Streifen 4 fixiert. Der am Überstand 16 vorstehende Rand 3 des Vlieses 1 wird nach unten umgeschlagen und an der Unterseite des Überstands 16 mittels des Klebebands vom Streifen 5 fixiert. Vorzugsweise wird der mit dem Streifen 5 versehene Rand des Vlies 1 im wesentlichen parallel zur Kante zwischen den Auftrittsfläche 13 und der nächsthöheren Stufe ausgerichtet. Der andere Rand des Vlies 1, der mit dem zweiten Streifen 5 versehen ist, wird um die Treppenvorderkante gelegt und kann exemplarisch an der im wesentlichen vertikal verlaufenden Vorderseite 14 der abzudeckenden Treppenstufe festgelegt werden. Sofern die Breite des Vlies 1 größer als die Summe der Tiefe der Auftrittsfläche 13 und der Höhe der Vorderseite 14 ist, kann der zweite Streifen entweder an der Unterseite der abzudeckenden Treppenstufe oder an der Auftrittsfläche 13 der nächsten Treppenstufe festgelegt werden.

In Fig. 5 ist ein Ausschnitt einer breiten Warenbahn des Vlieses 1 dargestellt, wobei mehrere Streifen 4, 5, 4', 5' und 4*, 5* angeordnet sind, die parallel zueinander und in Längsrichtung der Warenbahn verlaufen. Entlang des seitlichen Randes 2 verläuft der Streifen 4, und im Abstand S zum Streifen 4 befindet sich der Streifen 5. Neben diesem verläuft in einem Abstand A2 ein Streifen 4' und zu diesem im Abstand S wiederum ein Streifen 5'. Ebenfalls im Abstand A2 dazu, ist ein Streifen 4* und im Abstand A1 zum seitlichen Rand 3 ein Streifen 5* angeordnet. Diese beispielsweise 100 cm breite Warenbahn wird in Längsrichtung geschnitten, und zwar an den mit Pfeilen 18 markierten Stellen der Gesamtbreite. Auf diese Weise ergeben sich drei gleiche Warenbahnen des Vlieses 1, wie es in Fig. 1 dargestellt ist. Selbstverständlich kann die Warenbahn auch eine andere Breite aufweisen, und auch die Abstände A1, A2 und S können je nach Anforderung an das Maß des Abdeckvlieses 1 bei der Herstellung der Warenbahn variiert werden.

Somit betrifft die Erfindung ein Vlies 1 mit einer flüssigkeitsundurchlässigen Folie 8 aus Kunststoff, wobei das Vlies 1 aus saugfähigen Fasern besteht, die Kunststofffolie 8 auf einer Seite des Vlieses 1 befestigt ist und zumindest annähernd die gesamte Fläche des Vlieses 1 bedeckt, **dadurch gekennzeichnet, dass** entlang seitlicher Ränder 2, 3 des Vlieses 1 Streifen 4, 5; 4' 5', 4*, 5* angeordnet sind, die aus einer an der Kunststofffolie 8 angebrachten Klebstoffschicht und einer dieser abdeckenden Schutzfolie 10 bestehen.

Bei einer Ausgestaltung der Erfindung ist vorgesehen, dass die Klebstoffschicht ein doppelseitiges Klebeband 9 ist.

Bei einer weiteren Ausgestaltung der Erfindung ist vorgesehen, dass die Streifen 4, 5; 4', 5'; 4*, 5* über die gesamte Länge durchgehend ausgeführt sind.

Bei einer weiteren Ausgestaltung der Erfindung ist vorgesehen, dass die Streifen 4, 5; 4', 5'; 4*, 5* zu den seitlichen Rändern 2, 3 einen Abstand A1 von maximal 50 mm, vorzugsweise 10 mm bis 25 mm aufweisen.

Bei einer weiteren Ausgestaltung der Erfindung ist vorgesehen, dass die Streifen 4, 5; 4', 5'; 4*, 5* eine Breite b von 10 mm bis 30 mm, vorzugsweise etwa 20 mm aufweisen.

Bei einer weiteren Ausgestaltung der Erfindung ist vorgesehen, dass das Vlies 1 eine Breite von 20 cm bis 50 cm, vorzugsweise etwa 30 cm bis 33 cm besitzt.

Bei einer weiteren Ausgestaltung der Erfindung ist vorgesehen, dass die Streifen 4, 5; 4', 5'; 4*, 5* eine maximale Dicke von ≤ 0,2 mm vorzugsweise 0, 15 mm aufweisen.

Bei einer weiteren Ausgestaltung der Erfindung ist vorgesehen, dass die Dicke des Klebebandes 9 etwa 0,09 mm und die Dicke der Schutzfolie 10 etwa 0,06 mm beträgt.

## Patentansprüche

1. Schutzabdeckung mit einer Vlieslage (6) aus miteinander verbundenen Fasern und mit einer Folienlage (8), die aus einem Kunststoffmaterial hergestellt ist, wobei die Vlieslage (6) auf einer ersten Oberfläche der Folienlage (8) befestigt ist und wobei die Folienlage (8) zumindest annähernd die gesamte Fläche der Vlieslage (6) bedeckt, **dadurch gekennzeichnet, dass** auf einer zweiten Oberfläche der Folienlage (8), die der Vlieslage entgegengesetzt ist, jeweils entlang seitlicher Ränder (2, 3) der Folienlage (8) voneinander beabstandete Streifen (4, 5; 4' 5', 4*, 5*) angeordnet sind, die eine an der Folienlage (8) angebrachte Klebstoffschicht (9) und eine diese Klebstoffschicht (9) abdeckende Schutzfolie (10) umfassen.

2. Schutzabdeckung nach Anspruch 1, **dadurch gekennzeichnet, dass** die Klebstoffschicht (9) als doppelseitiges Klebeband ausgebildet ist.

3. Schutzabdeckung nach einem der Ansprüche 1 oder 2, **dadurch gekennzeichnet, dass** die Streifen (4, 5; 4', 5'; 4*, 5*) über die gesamte Länge durchgehend ausgeführt sind.

4. Schutzabdeckung nach einem der Ansprüche 1 bis 3, **dadurch gekennzeichnet, dass** die Streifen (4, 5; 4', 5'; 4*, 5*) zu den seitlichen Rändern (2, 3) einen Abstand (A1) von maximal 50 mm, vorzugsweise 10 mm bis 25 mm aufweisen.

5. Schutzabdeckung nach einem der Ansprüche 1 bis 4, **dadurch gekennzeichnet, dass** die Streifen (4, 5; 4', 5'; 4*, 5*) eine Breite (b) von 10 mm bis 30 mm, vorzugsweise etwa 20 mm aufweisen.

6. Schutzabdeckung nach einem der Ansprüche 1 bis 5, **dadurch gekennzeichnet, dass** die Vlieslage (6) eine Breite von 20 cm bis 50 cm, vorzugsweise etwa 30 cm bis 33 cm aufweist.

7. Schutzabdeckung nach einem der Ansprüche 1 bis 6, **dadurch gekennzeichnet, dass** die Streifen (4, 5; 4', 5'; 4*, 5*) eine maximale Dicke von weniger als 0,2 mm, vorzugsweise weniger als 0, 15 mm, aufweisen.

8. Schutzabdeckung nach Anspruch 7, **dadurch gekennzeichnet, dass** die Dicke der Klebestoffschicht (9) etwa 0,09 mm und die Dicke der Schutzfolie (10) etwa 0,06 mm beträgt.

9. Schutzabdeckung nach einem der vorhergehenden Ansprüche, **dadurch gekennzeichnet, dass** die Vlieslage (6) zumindest im Wesentlichen, vorzugsweise ausschließlich, aus saugfähigen Fasern hergestellt ist.

10. Schutzabdeckung nach einem der vorhergehenden Ansprüche, **dadurch gekennzeichnet, dass** die Klebstoffschicht (9) aus einem, vorzugsweise rückstandfrei ablösbaren, Synthese-Kautschukmaterial hergestellt ist.

11. Schutzabdeckung nach einem der vorhergehenden Ansprüche, **dadurch gekennzeichnet, dass** die Folienlage (8) als Polyethylenfilm ausgebildet ist, der auf der zweiten Oberfläche mit einer rutschhemmenden Beschichtung, vorzugsweise einer Ethylenvinylacetatbeschichtung, versehen ist.

## Claims

1. Protective cover comprising a non-woven layer (6) of joined fibres and a film layer (8) made of a plastic material, the non-woven layer (6) being secured to a first surface of the film layer (8) and the film layer (8) at least approximately covering the entire surface of the non-woven layer (6), **characterised in that**, on a second surface of the film layer (8) which is opposite the non-woven layer, spaced strips (4, 5; 4', 5'; 4*, 5*) are placed along lateral edges (2, 3) of the film layer (8), which strips comprise an adhesive layer (9) and a protective film (10) covering the adhesive layer (9).

2. Protective cover according to claim 1, **characterised in that** the adhesive layer (9) is designed as a double-faced adhesive tape.

3. Protective cover according to claim 1 or 2, **characterised in that** the strips (4, 5; 4', 5'; 4*, 5*) are continuous along their entire length.

4. Protective cover according to any of claims 1 to 3, **characterised in that** the strips (4, 5; 4', 5'; 4*, 5*) have a distance (A1) of no more than 50 mm, preferably of 10 mm to 25 mm, from the lateral edges (2, 3).

5. Protective cover according to any of claims 1 to 4, **characterised in that** the strips (4, 5; 4', 5'; 4*, 5*) have a width (b) of 10 mm to 30 mm, preferably of approximately 20 mm.

6. Protective cover according to any of claims 1 to 5, **characterised in that** the non-woven layer (6) has a width of 20 cm to 50 cm, preferably of approximately 30 cm to 33 cm.

7. Protective cover according to any of claims 1 to 6, **characterised in that** the strips (4, 5; 4', 5'; 4*, 5*) have a maximum thickness of less than 0.2 mm, preferably of less than 0.15 mm.

8. Protective cover according to claim 7, **characterised in that** the thickness of the adhesive layer (9) is approximately 0.09 mm and the thickness of the protective film (10) is approximately 0.06 mm.

9. Protective cover according to any of the preceding claims, **characterised in that** the non-woven layer (6) is at least substantially and preferably exclusively made of absorbent fibres.

10. Protective cover according to any of the preceding claims, **characterised in that** the adhesive layer (9) is made of a synthetic rubber material which is preferably detachable without leaving a residue.

11. Protective cover according to any of the preceding claims, **characterised in that** the film layer (8) is designed as a polyethylene film which is provided with a skid-resistant coating, preferably an ethylene vinyl acetate coating, on its second surface.

## Revendications

1. Revêtement de protection comportant une couche de non-tissé (6) constituée de fibres reliées les unes aux autres et comportant une couche de film (8) fabriquée à partir d'un matériau en matière plastique, sachant que la couche de non-tissé (6) est fixée sur une première surface de la couche de film (8) et la couche de film (8) recouvre au moins de manière approximative la totalité de la surface de la couche de non-tissé (6), **caractérisé en ce que** des bandes (4, 5 ; 4', 5' ; 4*, 5*) espacées les unes des autres sont disposées sur une deuxième surface de la couche de film (8), qui est opposée à la couche de non-tissé, respectivement le long des bords latéraux (2, 3) de la couche de film (8), lesquelles bandes comportent une couche de substance adhésive (9) appliquée au niveau de la couche de film (8) et un film de protection (10) recouvrant ladite couche de substance adhésive (9).

2. Revêtement de protection selon la revendication 1, **caractérisé en ce que** la couche de substance adhésive (9) est réalisée comme une bande adhésive double face.

3. Revêtement de protection selon l'une quelconque des revendications 1 ou 2, **caractérisé en ce que** les bandes (4, 5 ; 4', 5' ; 4*, 5*) sont réalisées en continu sur toute la longueur.

4. Revêtement de protection selon l'une quelconque des revendications 1 à 3, **caractérisé en ce que** les bandes (4, 5 ; 4', 5' ; 4*, 5*) sont espacées par rapport aux bords latéraux (2, 3) d'une distance (A1) de maximum 50 mm, de préférence d'une distance comprise entre 10 mm et 25 mm.

5. Revêtement de protection selon l'une quelconque des revendications 1 à 4, **caractérisé en ce que** les bandes (4, 5 ; 4', 5' ; 4*, 5*) présentent une largeur (b) comprise entre 10 mm et 30 mm, de préférence une largeur d'environ 20 mm.

6. Revêtement de protection selon l'une quelconque des revendications 1 à 5, **caractérisé en ce que** la couche de non-tissé (6) présente une largeur comprise entre 20 cm et 50 cm, de préférence une largeur comprise entre environ 30 cm et 33 cm.

7. Revêtement de protection selon l'une quelconque des revendications 1 à 6, **caractérisé en ce que** les bandes (4, 5 ; 4', 5' ; 4*, 5*) présentent une épaisseur maximale inférieure à 0,2 mm, de préférence inférieure à 0,15 mm.

8. Revêtement de protection selon la revendication 7, **caractérisé en ce que** l'épaisseur de la couche de substance adhésive (9) est d'environ de 0,09 mm, et **en ce que** l'épaisseur du film de protection (10) est d'environ de 0,06 mm.

9. Revêtement de protection selon l'une quelconque des revendications précédentes, **caractérisé en ce que** la couche de non-tissé (6) est fabriquée au moins essentiellement, de préférence exclusivement, à partir de fibres absorbantes.

10. Revêtement de protection selon l'une quelconque des revendications précédentes, **caractérisé en ce que** la couche de substance adhésive (9) est fabriquée à partir d'un matériau en caoutchouc de synthèse, de préférence pouvant être retiré sans laisser de résidus.

11. Revêtement de protection selon l'une quelconque des revendications précédentes, **caractérisé en ce que** la couche de film (8) est réalisée comme un film de polyéthylène, qui est pourvu sur la deuxième surface d'un revêtement antidérapant, de préférence d'un revêtement à base d'éthylène-acétate de vinyle.
